# EUROPEAN PATENT APPLICATION

(11) **EP 3 153 726 A1**
(43) Date of publication of application: **12.04.2017**
(21) Application number: 15803536.0
(22) Date of filing: 20.04.2015
(51) Int. Cl.: F16C 11/06, F16J 3/04, F16J 15/52

(54) **BALL JOINT DUST COVER**

(30) Priority: 06.06.2014 JP 2014117486
(71) Applicant: NOK Corporation, Tokyo 105-8585 (JP)
(72) Inventor: HOSEN, Tatsuro, Makinohara-shi, Shizuoka 421-0532 (JP)
(74) Representative: TBK
(86) International application number: PCT/JP2015/061926
(87) International publication number: WO 2015/186441

(57) **Abstract**

The purpose of the present invention is to provide a ball joint dust cover that limits the occurrence of opening of the so-called small diameter opening and has good small diameter opening sealing performance even in a low temperature environment. For said purpose, a ball joint dust cover in which the spherical head formed on one end of a ball stud is held in a socket, the shaft of the other end of the ball stud is fastened and fixed to a knuckle, the large diameter opening on one end is fixed and held on the outer circumferential surface of the socket, the small diameter opening at the other end is provided with a reinforcing ring made of a hard material, and a sealing lip that is in sealed sliding contact with the shaft is formed, is configured such that: a ring-shaped groove is formed between the inner circumferential surface of the reinforcing ring and the outer circumference of the sealing lip; and a metal ring-shaped spring is disposed in the ring-shaped groove, said metal ring-shaped spring being obtained from a cylindrical section that is fixed and held on the inner circumferential surface of the reinforcing ring and a spring section that is present on the inner circumferential surface side of the cylindrical section in a form that is folded back from one end of the cylindrical section in the axial direction and in which slits that are evenly spaced on a circle are formed for pressing the sealing lip toward the outer circumferential surface of the shaft.

## Description

### BACKGROUND OF THE INVENTION

### Field of the Invention

The present invention relates to a dust cover for a ball joint.

Further, the present invention relates to a dust cover for a ball joint which is used in an automobile suspension device, and a steering device.

### Description of the Conventional Art

Conventionally, as a ball joint to which a dust cover is installed for the purpose of a dust prevention and a water prevention in a ball joint coupling portion, there has been known a dust cover for a ball joint which is described in Fig. 12 (patent document 1).

In a seal structure of this kind of ball joint dust cover, a spherical head portion 200 formed in one end of a ball stud 100 is retained within a socket 300.

Further, a shaft 400 in the other end of the ball stud 100 is fastened and fixed to a knuckle 500.

On the other hand, a one end large-diameter opening portion 800 formed into an approximately C-shaped cross section of a dust cover 600 made of an elastic material is fitted and retained into an annular socket groove portion 310 which is formed in an outer peripheral surface of the socket 300 by an annular presser bar ring 700, and the other end small-diameter opening portion 150 in which a reinforcing ring formed into an L-shaped cross section and made of a metal material is embedded is retained to the shaft 400. Further, a seal lip existing between the metal reinforcing ring and the shaft 400 and made of a rubber-like elastic material is appropriately compressed, and a sealing performance is achieved in relation to an oscillating motion of the ball stud 100 on the basis of a repulsive force (a tension force) and a following property of the rubber.

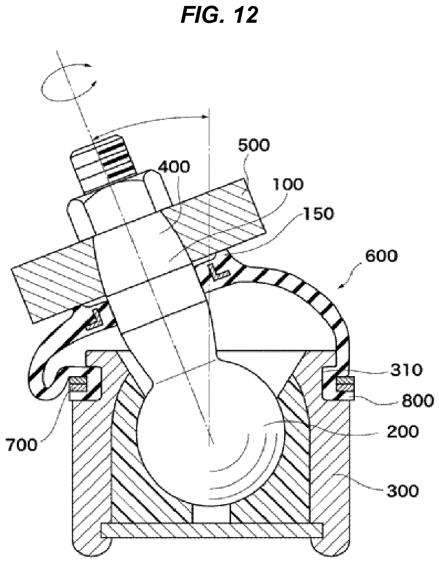

However, when this kind of conventional dust cover 600 made of the elastic material oscillates in a state in which the ball stud 100 is inclined as shown in Fig. 12, a force elongating the small-diameter opening portion 150 is applied to the dust cover 600 in a side where a film portion of the dust cover 600 made of the elastic material extends (a right side on the drawing). As a result, there is generated a so-called opening phenomenon of the small-diameter opening portion 150 is generated so that contact between a lip portion of the small-diameter opening portion 150 and the knuckle 500 is disengaged.

As a result, a sealing performance in the small-diameter opening portion 150 is lowered, and there has been a problem that earth and sand or refuse enters from the outside into the dust cover 600.

Particularly, the rubber constructing the dust cover 600 made of the elastic material loses its retractility under a low-temperature atmosphere, and a following property of the film portion to the oscillating motion of the ball joint is lowered. As a result, it has been known that an opening phenomenon that the seal lip moves away from the shaft 400 is significantly generated.

Further, in the case that the opening phenomenon mentioned above is generated, not only earth and sand or refuse enters into the dust cover 600 from the outside, but also there has been brought about a risk that grease sealed within the dust cover 600 leaks out.

As a countermeasure for reducing the opening phenomenon mentioned above, there has been proposed a dust cover for a ball joint which intends to improve the sealing performance against the oscillating motion of the ball stud by embedding a spring means having a coil spring shape in an outer peripheral side of a seal lip, however, this countermeasure is not sufficient (patent document 2).

### PRIOR ART DOCUMENT

### Patent Documents

Patent Document 1: Japanese Unexamined Patent Publication No. S62(1987)-137408
Patent Document 2: Japanese Unexamined Patent Publication No. 2011-85257

### SUMMARY OF THE INVENTION

### Problem to be Solved by the Invention

The present invention is made by taking the problem mentioned above into consideration, and an object of the present invention is to provide a dust cover for a ball joint which suppresses generation of a so-called opening phenomenon of a small-diameter opening portion that contact between the small-diameter opening portion and a shaft is disengaged, even under a low-temperature atmosphere, and has a good sealing performance of the small-diameter opening portion.

### Means for Solving the Problem

A dust cover for a ball joint according to the present invention is structured such that a spherical head portion formed in one end of a ball stud is retained within a socket, and a shaft in the other end of the ball stud is fastened and fixed to a knuckle.

Further, the dust cover for the ball joint is provided with a basic structure in which a one end large-diameter opening portion is fixed and retained to an outer peripheral surface of the socket, and the other end small-diameter opening portion is provided with a reinforcing ring made of a hard material and forms a seal lip which slides in a sealing manner with the shaft.

Further, an annular groove portion is formed between an inner peripheral surface of the reinforcing ring and an outer peripheral side of the seal lip.

Further, the dust cover for the ball joint has a characteristic structure in which a metal spring ring is arranged within the annular groove portion, the metal spring ring being constructed by a cylinder portion which is fixed and retained to the inner peripheral surface of the reinforcing ring, and a spring portion which exists in an inner peripheral surface side of the cylinder portion in such a manner as to be folded back from one end in an axial direction of the cylinder portion and forms slits pressing the seal lip to an outer peripheral surface side of the shaft and uniformly arranged circumferentially.

### Effect of the Invention

The present invention achieves the following effects.

According to the dust cover for the ball joint of the invention described in Claim 1, the annular groove portion is formed between the inner peripheral surface of the reinforcing ring and the outer peripheral side of the seal lip, and the metal spring ring is arranged within the annular groove portion, the metal spring ring being constructed by the cylinder portion which is fixed and retained to the inner peripheral surface of the reinforcing ring, and the spring portion which exists in the inner peripheral surface side of the cylinder portion in such a manner as to be folded back from one end in the axial direction of the cylinder portion and forms the slits pressing the seal lip to the outer peripheral surface side of the shaft and uniformly arranged circumferentially. Therefore, it is possible to suppress generation of a so-called opening phenomenon of the other end small-diameter opening portion, that is, the contact between the other end small-diameter opening portion and the shaft is disconnected, even under a low-temperature atmosphere, and it is possible to keep a sealing performance of the other end small-diameter opening portion well.

Further, according to the dust cover for the ball joint of the invention described in Claim 2, the cylinder portion of the metal spring ring is structured such as to be fixed and retained to the inner peripheral surface of the reinforcing ring which is formed such as to be narrowed toward an opening side of the annular groove portion. Therefore, since it is possible to more securely prevent the metal spring ring from falling away from the annular groove portion, it is possible to suppress the generation of the opening phenomenon of the other end small-diameter opening portion and it is possible to keep the sealing performance of the other end small-diameter opening portion well.

Further, according to the dust cover for the ball joint of the invention described in Claim 3, the dust cover is structured such as to be engaged in a concavo-convex manner between the cylinder portion of the metal spring ring and the inner peripheral surface of the reinforcing ring. Therefore, since it is possible to more securely prevent the metal spring ring from falling away from the annular groove portion, it is possible to suppress the generation of the opening phenomenon of the other end small-diameter opening portion and it is possible to keep the sealing performance of the other end small-diameter opening portion well.

Further, according to the dust cover for the ball joint of the invention described in Claim 4, the annular groove portion is open to an inner portion side of the dust cover. Therefore, since earth and sand does not enter into the annular groove portion, it is possible to stably maintain the performance of the metal spring ring over a long period of time.

### BRIEF EXPLANATION OF THE DRAWINGS

Fig. 1 is a vertical cross-sectional view of a dust cover for a ball joint according to the present invention;
Fig. 2 is a vertical cross-sectional view before installation of the dust cover shown in Fig. 1;
Fig. 3 is a partly enlarged view of Fig. 2;
Fig. 4 is a plan view of a metal spring ring which is used in Fig. 1;
Fig. 5 is a cross-sectional view along a line A-A in Fig. 4;
Fig. 6 is a vertical cross-sectional view showing a state before the metal spring rig is installed to the dust cover shown in Fig. 2;
Fig. 7 is a partly vertical cross-sectional view describing the other method for fixing the metal spring ring used in Fig. 2 to the reinforcing ring;
Fig. 8 is a partly vertical cross-sectional view describing further the other method for fixing the metal spring ring used in Fig. 2 to the reinforcing ring;
Figs. 9A, 9B and 9C are partly vertical cross-sectional views describing the other shapes of the metal spring ring;
Fig. 10 is a partly vertical cross-sectional view showing the other shape of the reinforcing ring shown in Fig. 2;
Fig. 11 is a partly vertical cross-sectional view showing further the other shape of the reinforcing ring shown in Fig. 2;
Fig. 12 is a vertical cross-sectional view of a dust cover for a ball joint according to a prior art.

### DETAILED DESCRIPTION OF PREFERRED EMBODIMENT

A description will be given below of a mode for carrying out the present invention.

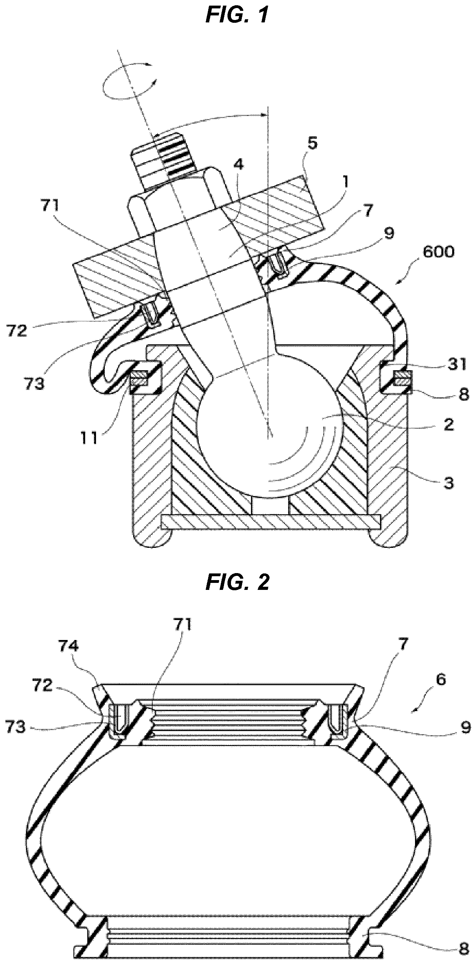

As shown in Figs. 1, 2, 3, 4 and 5, a dust cover 6 for a ball joint according to the present invention has a basic structure in which a spherical head portion 2 formed in one end of a ball stud 1 is retained within a socket 3, a shaft 4 in the other end of the ball stud 1 is fastened and fixed to a knuckle 5, a one end large-diameter opening portion 8 is fixed and retained to an outer peripheral surface of the socket 3, and the other end small-diameter opening portion 7 is provided with a reinforcing ring 9 made of a hard material and forms a seal lip 71 which slides in a sealing manner with the shaft 4.

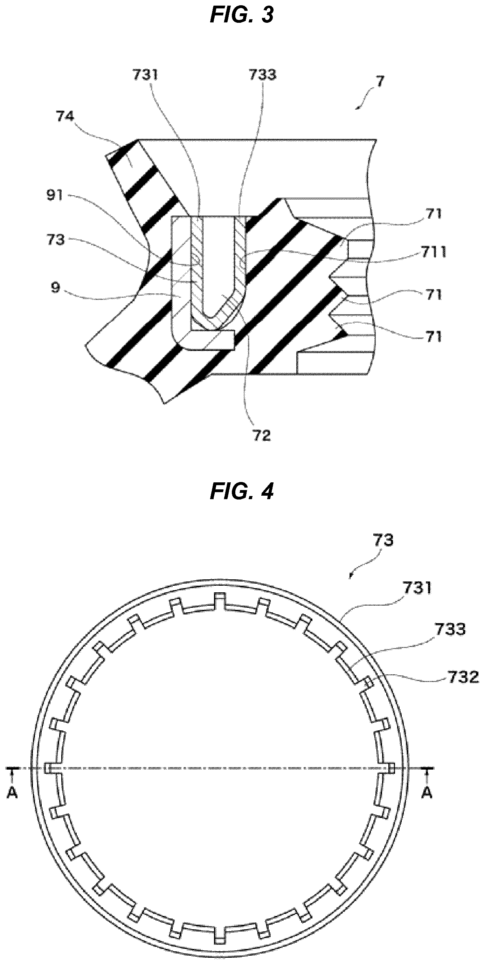

Further, as clearly shown in Fig. 3, an annular groove portion 72 is formed between an inner peripheral surface 91 of the reinforcing ring 9 and an outer peripheral side 711 of the seal lip 71.

Further, a metal spring ring 73 is arranged within the annular groove portion 72, and the metal spring ring 73 is provided with a cylinder portion 731 which is fitted and fixed to the inner peripheral surface 91 of the reinforcing ring 9, and a spring portion 733 which exists in an inner peripheral surface side of the cylinder portion 731 in such a manner as to be folded back like a U-shaped form from one end in an axial direction of the cylinder portion 731 and presses the seal lip 71 to an outer peripheral surface side of the shaft 4.

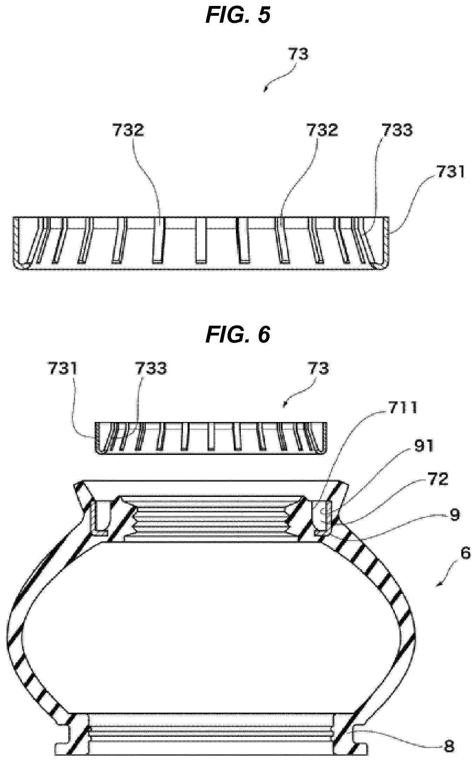

Further, a plurality of slits 732 uniformly arranged circumferentially are formed in the spring portion 733 of the metal spring ring 73 as shown in Figs. 4 and 5.

Owing to existence of the slits 732, the spring portion 733 can achieve a spring action, and can elastically and strongly press the seal lip 71 to the outer peripheral surface side of the shaft 4.

Since the dust cover 6 for the ball joint according to the present invention is structured as mentioned above, it is possible to suppress generation of the so-called opening phenomenon of the other end small-diameter opening portion 7, that the contact between the other end small-diameter opening portion 7 and the shaft 4 is disconnected, even under the low-temperature atmosphere, and it is possible to keep the sealing performance of the other end small-diameter opening portion 7 well.

Further, the installation of the metal spring ring 73 to the dust cover 6 is achieved by preparing the dust cover 6 in which the annular groove portion 72 is formed between the inner peripheral surface 91 of the reinforcing ring 9 and the outer peripheral side 711 of the seal lip 71, and the metal spring ring 73 made by another process as shown in Fig. 6 and thereafter fitting and fixing the metal spring ring 73 into the annular groove portion 72.

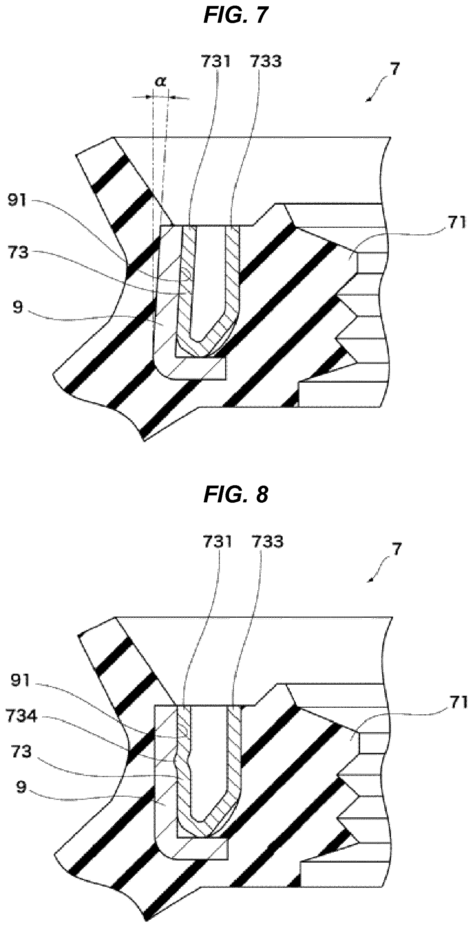

In this method, the cylinder portion 731 of the metal spring ring 73 is fitted and fixed to the cylindrical inner peripheral surface 91 of the reinforcing ring 9 with a fixed fitting margin, however, as a method of more strongly fitting and fixing, there are methods shown in Figs. 7 and 8.

More specifically, according to the method shown in Fig. 7, the inner peripheral surface 91 of the reinforcing ring 9 is formed into such a shape that the inner peripheral surface 91 is narrowed toward an opening side (an upper side of the drawing) of the annular groove portion 72, and the cylinder portion 731 of the metal spring ring 73 is fixed and retained to the tapered inner peripheral surface 91 with an inclination angle α of incline. Therefore, it is possible to securely prevent the metal spring ring 73 from falling away from the annular groove portion 72. As a result, it is possible to suppress the generation of the opening phenomenon of the other end small-diameter opening portion 7, and it is possible to keep the sealing performance of the other end small-diameter opening portion 7 well.

Further, according to the method shown in Fig. 8, the cylinder portion 731 of the metal spring ring 73 and the inner peripheral surface 91 of the reinforcing ring 9 are engaged therebetween by means of a concavo-convex engagement portion 734. Therefore, it is possible to securely prevent the metal spring ring 73 from falling away from the annular groove portion 72. As a result, it is possible to suppress the generation of the opening phenomenon of the other end small-diameter opening portion 7, and it is possible to keep the sealing performance of the other end small-diameter opening portion 7 well.

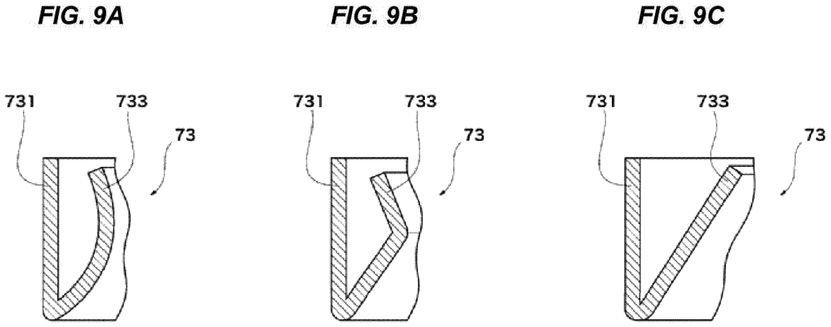

The shape of the metal spring ring 73 is not limited to a U-shaped form in its cross section, but can employ various shaped, for example, an approximately D-shaped form as shown in Fig. 9A, an approximately dogleg shape as shown in Fig. 9B and an approximately V-shaped form as shown in Fig. 9C.

Further, the shape of the reinforcing ring 9 is not limited to the L-shaped form in its cross section, but may be formed into an approximately Z-shaped form.

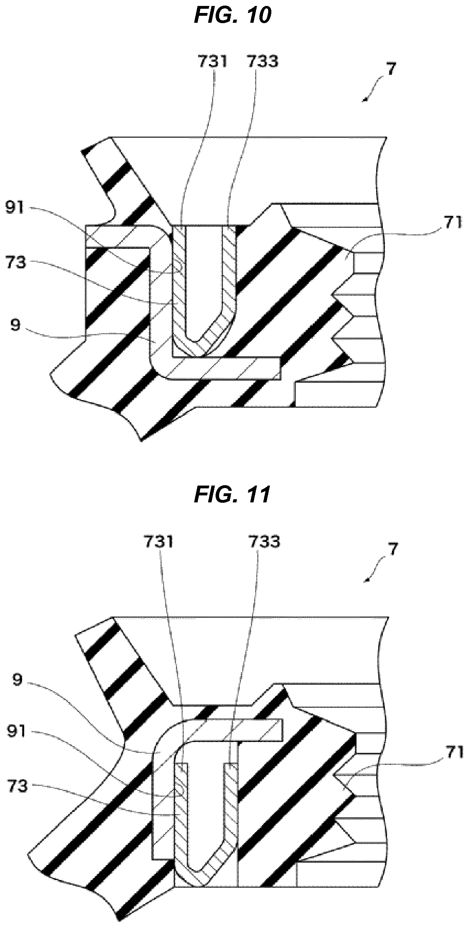

Further, the shape of the reinforcing ring 9 may be formed into an inverted L-shaped form in its cross section, so that the annular groove portion 72 is open to an inner portion side (a lower side of the drawing) of the dust cover 6, as shown in Fig. 11.

According to the shape as mentioned above, the earth and sand does not enter into the annular groove portion 72. Therefore, it is possible to stably maintain the performance of the metal spring ring 73 over a long period of time.

Further, a metal material and a resin material can be appropriately selected and employed as a material of the reinforcing ring 9.

Further, a material of the dust cover 6 is selected and used in conformity to an intended use, from a rubber-like elastic material such as chloroprene, a polyester elastomer, and a thermoplastic elastomer such as a thermoplastic polyurethane.

Further, grease is sealed into the dust cover 6.

On the other hand, the one end large-diameter opening portion 8 approximately formed into a C-shaped cross section of the dust cover 6 is structured such as to be fixed and retained into an annular socket groove portion 31 formed in the outer peripheral surface of the socket 3, by an annular presser bar ring 11.

Further, the presser bar ring 11 employs a circlip approximately formed into a rectangular cross section, however, various presser rings can be employed in correspondence to intended uses, for example, a type obtained by burying and integrating a metal reinforcing ring in the one end large-diameter opening portion 8.

Further, a dust lip 74 is formed in an end surface which comes into contact with the knuckle 5 in the other end small-diameter opening portion 7.

Further, it goes without saying that the present invention is not limited to the best mode for carrying out the invention mentioned above, but can employ various structures without departing from the scope of the present invention.

### Industrial Applicability

The present invention can be used in a ball joint which is used in a suspension device and a steering device of an automobile.

### Description of Reference Numerals

- 1: ball stud
- 2: spherical head portion
- 3: socket
- 4: shaft
- 5: knuckle
- 6: dust cover
- 7: other end small-diameter opening portion
- 8: one end large-diameter opening portion
- 9: reinforcing ring
- 11: presser ring
- 31: socket groove portion
- 71: seal lip
- 72: annular groove portion
- 73: metal spring ring
- 74: dust lip
- 91: inner peripheral surface
- 711: outer peripheral side
- 731: cylinder portion
- 732: slit
- 733: spring portion
- 734: concavo-convex engagement portion

## Claims

1. A dust cover (6) for a ball joint comprising:
a spherical head portion (2) formed in one end of a ball stud (1), the spherical head portion (2) being retained within a socket (3),
a shaft (4) in the other end of said ball stud (1), the shaft (4) being fastened and fixed to a knuckle (5);
a one end large-diameter opening portion (8) being fixed and retained to an outer peripheral surface of said socket (3); and
the other end small-diameter opening portion (7) provided with a reinforcing ring (9) made of a hard material and forming a seal lip (71) which slides in a sealing manner with said shaft (4),
wherein an annular groove portion (72) is formed between an inner peripheral surface (91) of said reinforcing ring (9) and an outer peripheral side (711) of said seal lip (71), and a metal spring ring (73) is arranged within said annular groove portion (72), the metal spring ring (73) being constructed by a cylinder portion (731) which is fixed and retained to the inner peripheral surface (91) of said reinforcing ring (9), and a spring portion (733) which exists in an inner peripheral surface side of said cylinder portion (731) in such a manner as to be folded back from one end in an axial direction of said cylinder portion (731) and forms slits (732) pressing said seal lip (71) to an outer peripheral surface side of said shaft (4) and uniformly arranged circumferentially.

2. The dust cover for the ball joint according to claim 1, wherein said cylinder portion (731) of said metal spring ring (73) is fixed and retained to the inner peripheral surface (91) of said reinforcing ring (9) which is formed such as to be narrowed toward an opening side of said annular groove portion (72).

3. The dust cover for the ball joint according to claim 1, wherein said cylinder portion (731) of said metal spring ring (73) and the inner peripheral surface (91) of said reinforcing ring (9) are engaged in a concavo-convex manner therebetween.

4. The dust cover for the ball joint according to claim 1 or 2, wherein said annular groove portion (72) is open to an inner portion side of said dust cover (6).
